# EUROPEAN PATENT APPLICATION

(11) **EP 2 481 278 A1**
(43) Date of publication of application: **01.08.2012**
(21) Application number: 12152756.8
(22) Date of filing: 26.01.2012
(51) Int. Cl.: A01G 1/02, A01G 31/00

(54) **Kit for household production of forced / blanched vegetables and method for making the same**

(30) Priority: 27.01.2011 IT PI20110006
(71) Applicant: Azienda Agricola Pacini Camillo, 56017 San Giuliano Terme (PI) (IT)
(72) Inventor: Pacini, Giovanni, 56017 San Giuliano Terme (PI) (IT)
(74) Representative: Leotta, Antonio

(57) **Abstract**

A kit for the cultivation of small quantities of plants which can be cultivated by methods of forcing / blanching comprises a number of roots prepared to be subjected to the above process of cultivation, a bowl and a special container which acts both as a package that a barrier of protection from light. The inventive kit contains everything needed to grow vegetables at home such as Belgian endive, cabbage, radishes, by the process of forcing / blanching.

## Description

### Technical Field

The technical field is related to the household or hobbyist production of Belgian endive.

More precisely the present invention concerns the realization of complete kits for the domestic cultivation, or in any case a small scale cultivation, of plants that are suitable to be cultivated with the so-called process of "forcing / bleaching"

The present invention also relates to a method for the production of these kits for the domestic cultivation of plants cultivated with the process of "forcing / bleaching".

### Background Art

They are known in the field of fruit and vegetable cultivation the so-called forcing and bleaching techniques according to which some kitchen garden plants can advantageously be cultivated.

Very briefly, the forcing in practice consists in forcing a plant to grow by subjecting it to conditions of temperature and humidity. The forcing is usually performed by taking the bulbs or roots of the plants, keeping for a certain period of time at low temperature, and finally forcing the development by changing the environmental conditions in warm and humid. Forcing can be done both on land and in hydroponic culture in various types of substrates, or even in water.

Just briefly, bleaching is to grow the plant in a dark environment so that leaves, beet leaves and fruits grow whiter in colour than in natural light conditions: in such conditions certain vegetables taste nicer and crisper.

A typical example of a vegetable normally subjected to processes of forcing / bleaching is the endive (*Cychorium endivia*) in which the variety known as the "Belgian" is subjected to bleaching, thus assuming the typical white coloration.

To produce Belgian endive are used the roots which are obtained by sowing in open fields in summer and it takes 3/4 months in order they are ripe to pick, namely in order they have enough reserve material stored so that from their peak can grow and develop the clump of salad.

Chicory plants are harvested ripe and their roots are prepared for forcing / bleaching. Typically, for endive, the preparation process comprises: the separation of the root system from the vegetative portion of the plant to obtain roots of a length between 8 cm and 15 cm with an adjoining vegetative portion, called collar, of a length between 1 cm and 4 cm, the washing of the roots; the grouping in bunches; the cold storage at a temperature between 0.5 ° C and 5 ° C and relative humidity between 80% and 90% for a time ranging between 4 and 7 months.

The roots prepared for forcing can be picked and subjected to the process of forcing / bleaching in the most appropriate time depending on market requirements and manufacturing capabilities. As already mentioned the forcing / bleaching is typically performed on an industrial level, in the ground or, more commonly, in hydroponics even in the absence of substrate in large cement tanks containing running water at a suitable temperature and covered with plastic sheeting, non-transparent, for example black PVC, laying on arcs in iron or wood so as to form a tunnel.

### Summary of invention

It is an object of the present invention to propose a kit for the cultivation on a small scale, using the technique of forcing / bleaching, of plant species cultivated using the above technique.

Further object of the present invention is to propose a method for the production of kits for the cultivation on a small scale, using the technique of forcing / bleaching, of plant species cultivated using the above technique.

The above objects and others are achieved by means of a grow kit as set forth and characterized in the apparatus independent claim

The dependent claims by the above apparatus independent claim expose features of the kit of the present invention or different embodiments of the main inventive core.

According to a characteristic feature of the present invention a kit for the cultivation of small quantities of plants cultivated by forcing / bleaching techniques comprises:
- a bowl made of glass or plastic material suitable for food;
- 5 to 50, preferably 8 and 20, roots of a plant species cultivated using a technique of forcing / bleaching, prepared so as to be subjected to the process of forcing / bleaching;
- a container of a material permeable to air and water vapor and substantially impermeable to light, provided with an opening at one flat side of sufficient width to permit the passage of said bowl, in the container being housed the bowl and the roots enclosed in their bag.

Advantageously, the kit also contains a bag with holes or made in a material permeable to air and water vapor in which the roots are packed.

The kit, which is very small and easily transportable and storable, contains all the necessary elements for subjecting the roots contained in it to the process of forcing / bleaching to obtain, at the end of the process itself, the roots vegetated ready for consumption. The kit of the invention can be proposed on the market with considerable advantages for the end consumer who may have the certainty that will consume a fresh product by himself grown without the need of having any kind of experience in the field. In addition, the kit can be sized so that the crop can be performed everywhere, even inside private homes.

The above objects and others are achieved also by means of a method for the realization of a grow kit as set forth and claimed in the method independent claim.

The dependent claims by the above method independent claim expose features of the method of the present invention or different embodiments of the main inventive core.

Typically the roots of plants cultivated using forcing / bleaching techniques are obtained from sowing in the field, collection and preparation of the roots by cutting, washing and storage at certain temperatures and humidity levels.

According to another characteristic aspect of the present invention a method for the realization of a kit for the cultivation of small quantities of plants cultivated by forcing / bleaching techniques provides the packaging of roots ready for the process of forcing / bleaching in bags containing a number of roots between 5 and 50, preferably between 8 and 20; and accommodating each of said bags containing roots and a bowl made of glass or plastic material suitable to contain the roots arranged in a substantially vertical position in a container of a material permeable to air and to water vapor but substantially impermeable to light, and provided with an opening at one side of sufficient width to allow the passage of the said bowl.

The realization of the kit according to the present invention is extremely simple, very cheap materials and components can be used and it enables a farm to delegate to the final consumer the execution of the processes of forcing / bleaching.

### Brief description of drawings

These and other features of the invention will be more easily understood from the following description of preferred embodiments of the invention, given as non-limiting examples, with reference to the accompanying drawings in which:
- Figure 1 shows roots prepared for the process of forcing / bleaching packed inside their bag in a kit according to the present invention;
- Figure 2 shows a root of *Cychorium endivia* prepared according to the method of the invention in order to be subjected to a process of forcing / bleaching;
- Figure 3 shows a bowl of a kit according to the present invention in which the roots are arranged in a substantially vertical position;
- Figure 4 shows a container of a kit according to the present invention;
- Figure 5 shows a different embodiment of a kit according to the present invention in the configuration for marketing;
- Figure 6 shows the kit of Figure 5 in use configuration.

### Description of embodiments

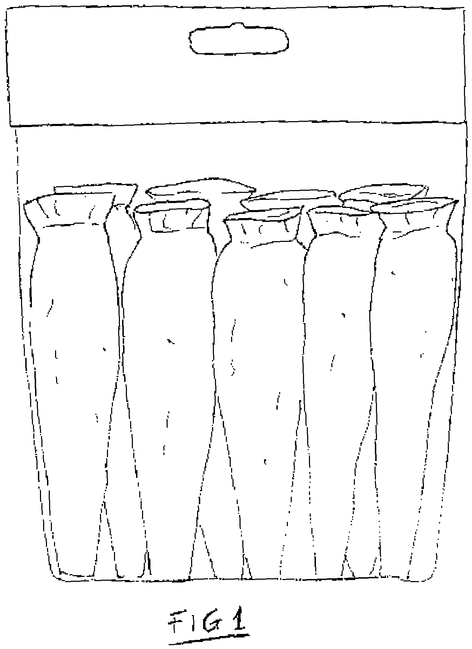

In Figures 1 to 4, there is shown an embodiment of a kit for the cultivation of small quantities of *Cychorium endivia* via the technique of forcing / bleaching.

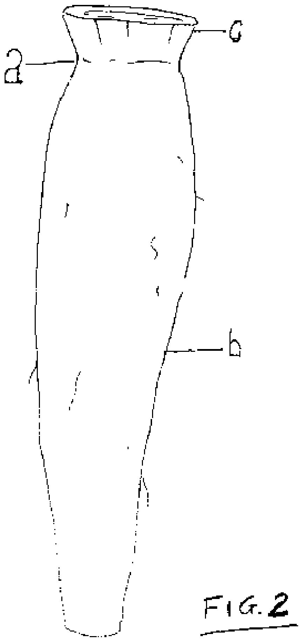

In fig. 2 it is shown a root prepared so as to be ready to be subjected to the process of forcing / bleaching. The preparation of the root takes place, inter alia, by cutting the plant usually crop in the field in the right length preferably between 8cm and 15cm for the root portion (indicated by b in Fig. 2) and between 1 and 4 for the leaves (indicated by c in Fig. 2) in which the above measures are taken from a point called collar and denoted by c in Fig. 2.

For the realization of a kit, the root are packed in bags or envelopes containing a number between 5 and 50 roots, preferably between 8 and 20. The bags or envelopes are preferably perforated or made of breathable material, such as transparent plastic for food.

The kit also includes a bowl made of glass, plastic for food or other suitable material, preferably transparent, with a plane size suitable to contain the roots of a kit keeping arranged alongside one another in a substantially vertical position, as shown in Fig . 3. Advantageously the height of the bowl is approximately equal to the length of the root, or in any case must be greater than half the length of the root and less than the height of the container included in the kit. In the example shown the bowl has a rectangular plan shape with rounded corners.

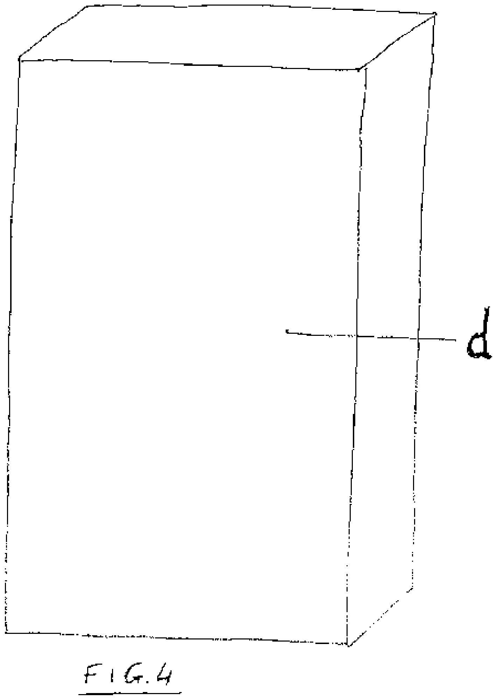

A container included in a kit according to the invention is depicted in Fig. 4 and indicated with "d". The container has shape in plan view similar to that of the bowl which should accommodate and plan dimensions slightly greater than it to allow the correct development of the lump of salad.

Advantageously, the container has plan dimensions greater than those of the bowl of a quantity of between 10 cm² and 300 cm², preferably between 40 cm² and 80cm². The height of the container is substantially equal to the overall height of the plant of *Cychorium endivia* given by the sum of the length of the root portion and the height of the vegetation developable by it. In practice, the container may have a height greater than the average length of the roots of a quantity comprised between 5 cm and 50 cm, preferably between 10 cm and 20 cm.

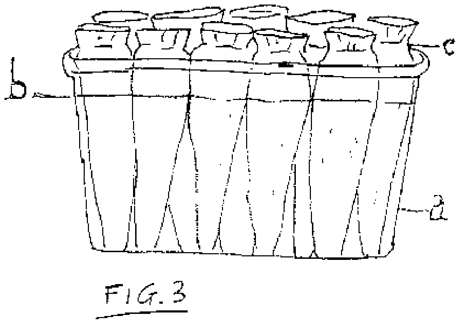

A kit according to the present invention therefore comprises a number of roots (fig. 2) prepared to be subjected to the process of forcing / bleaching, enclosed in an envelope (fig. 1), a bowl made of glass or plastic for food ("a "in fig. 3) and a container (" d "of Fig. 4) of plan dimensions suitable to accommodate the bowl, having an open base and a height substantially equal to or greater than the overall height of the roots and associated vegetation that are able to grow. The container must also be of a material breathable but substantially impervious to light. Advantageously, the kit ready to be marketed is configured with the bowl and the roots in its envelope accommodated in the container which is provided with closure means which retain closed the said open base.

The realization of the kit takes place after preparation of the roots. The roots are conventionally obtained as described in the introductory part of this application. Advantageously, before the housing in the containers, the roots are usually preserved in cold storage, at temperatures between 0 ° C and 10 ° C, preferably between 0.5 ° C and 5 ° C, and relative humidity of about 80 - 90 % for a period of time preferably between 4 and 7 months, but which could also be significantly shorter or longer for plant varieties other than *Cychorium endivia.*

When appropriate, according to the method of the present invention, a quantity of between 5 and 50, preferably between 8 and 20, roots (Fig. 2) is drawn from the refrigeration cells and, possibly, packaged in an envelope (Fig. 1). Then the envelope with the roots (Fig. 1), and a bowl ("a" of Fig. 3) are housed in a container ("d" of Fig. 4) whose open base is then closed by suitable closure means and is then ready to be marketed.

With the kit of the present invention, economical and easy to prepare is very easy to implement the process of forcing / bleaching also at the household level. In fact, once the container has been opened, the roots prepared and in the correct size are placed in a substantially vertical position inside the bowl which is then filled with water up to approximately the level indicated with "b" in Fig. 3 (it has to be taken into account that each root, during the 15/20 day duration of the process of forcing / bleaching absorbs about 100 cc of water). On the bowl is then placed the container upside down, as a cap, so that it gets into contact with the support base of the bowl, thus preventing the passage of light to the roots. The container is advantageously made of cardboard which ensures proper ventilation and gas exchange with the outside and keeping dark the internal volume, prerequisite for the formation and growth of the tender and white lump of chicory (*Cychorium endivia*) that will be completed at home with temperatures between 17 ° C and 21 ° C in 15/20 days after which the container / cap will be lifted for checking the ripeness of the lump. Once picked the lump we proceed to the emptying of the container from the roots, which also can be eaten, and the container and the bowl will be able to be possibly reused by purchasing a new envelope of roots (Fig. 1) ready to be subjected to the process of forcing / bleaching.

The characteristics and advantages of the kit described above for the cultivation at the household level of plant species using the technique of forcing / bleaching and its method of realization of course remain unaltered even in the presence of changes or variants.

The above described components of the kit, in particular the envelope, the bowl and the container can be replaced with functionally equivalent components. The envelope has the function of properly preserve the roots until they are needed and is therefore preferably made of transparent plastic material for food, perforated or otherwise breathable material. The bowl must have the correct dimensions in height and in plan in order to accommodate the expected number of roots keeping them in the proper substantially vertical position. Preferably it is made of transparent plastic material that allows to see the level of water present inside. The form in plant may of course be any. The container is advantageously made of cardboard or other paper material of sufficient thickness, as this material is substantially impermeable to light and at the same time ensures the correct degree of breathability to prevent the formation of mildew or rot in the plant species. The container has initially the function to accommodate internally the other components of the kit and, during use, it is a hood which prevents light from reaching the bowl and its content. To properly carry out this function, the container advantageously has a plan shape similar to that of the bowl, plan dimensions slightly larger and height such as to allow the correct development of the vegetation.

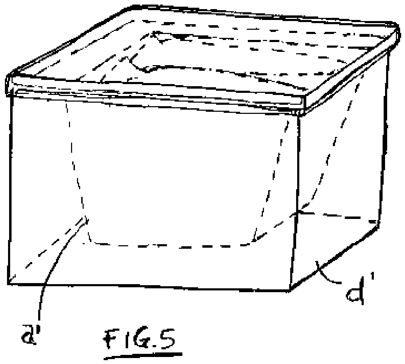

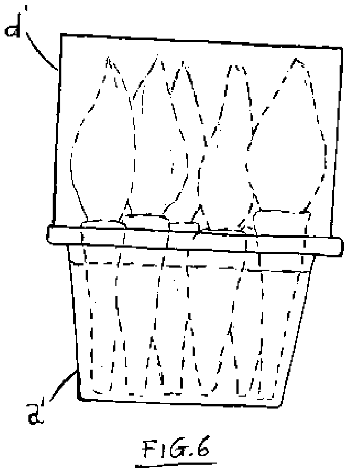

Alternative embodiments of the kit of the invention may also provide bowls in material impervious to light and containers of a suitable form to be coupled with the relative open base to the upper edge of the bowl, as shown in Figs. 5 and 6. With this type of solution the bowl 'a' ensures the darkness to the roots and the container 'd' prevents at the top the passage of the light leaving sufficient space for the growth of the vegetation portion. In this case the height of the container could be limited to the height of the vegetation of the plant species or to the height sufficient to accommodate all the components in the configuration of marketing, which of these two heights is greater. With the embodiment just described the complete kit might be less cumbersome, albeit at the expense of the convenience of having the transparent container that allows to see the level of water inside.

By suitably modifying the size of components, a kit according to the present invention can be used to implement at the household level the process of forcing / bleaching of any plant species that can be grown using this technique. These can be, for example, the cardoon, celery, chicory common Farinello good-henry, leek, sea cabbage, asparagus, cabbage, dandelion, lettuce, lovage, rhubarb.

These and other variants of the kit of the present invention and its method of realization could be envisaged, while always remaining within the scope of protection defined by the following claims.

## Claims

1. Kit for the cultivation of small quantities of plants which can be cultivated by methods of forcing / bleaching **characterized in that** it comprises: a bowl made of glass or plastic material for food; between 5 to 50, preferably between 8 and 20, roots of a plant cultivable by a forcing / bleaching technique, these roots being prepared so as to be subjected to the process of forcing / bleaching; a container of a material permeable to air and water vapor and substantially impermeable to light, said container being provided with an opening in correspondence of one side; said container having dimensions such that, in the configuration for storage and marketing, can accommodate internally said bowl and said roots, and that, in a configuration for implementing said process of forcing / bleaching, can mate with, or house, said bowl with said roots and the relating vegetation preventing the light to reach them.

2. Kit for the cultivation of small quantities of plants which can be cultivated by methods of forcing / bleaching according to claim 1 **characterized in that** said container has, in plan view, similar shape to that of said bowl and dimensions greater than those of said bowl of an amount ranging between 10 cm² and 300 cm², preferably between 40 cm² and 80cm².

3. Kit for the cultivation of small quantities of plants which can be cultivated by methods of forcing / bleaching according to the previous claim **characterized in that** said container has a height substantially equal to the overall height of said plants given by the sum of the length of said root and the height of their vegetation portion.

4. Kit for the cultivation of small quantities of plants which can be cultivated by methods of forcing / bleaching according to the previous claim **characterized in that** said container has a height greater than an amount of between 5 cm and 50 cm, preferably between 10 cm and 20 cm, compared to the average length of said roots.

5. Kit for the cultivation of small quantities of plants which can be cultivated by methods of forcing / bleaching according to claim 1 **characterized in that** said bowl is substantially impermeable to light, said container being coupled to said bowl at the edge of it in a mode such as to prevent the passage of light within and having a height equal at least the height of the vegetation portion of said roots.

6. Kit for the cultivation of small quantities of plants which can be cultivated by methods of forcing / bleaching according to any preceding claim **characterized in that** it comprises a bag within which are contained said roots, said bag being perforated or made of a material permeable to air and to steam.

7. Kit for the cultivation of small quantities of plants which can be cultivated by methods of forcing / bleaching according to any preceding claim **characterized in that** said bowl has a height approximately between the maximum height of said roots and the 2/3 of the height of said roots, and plan dimensions such as to contain said roots maintained in a substantially vertical position.

8. Kit for the cultivation of small quantities of plants which can be cultivated by methods of forcing / bleaching according to any preceding claim **characterized in that** said container is made of cardboard, paper of sufficient thickness or other paper like material.

9. Kit for the cultivation of small quantities of plants which can be cultivated by methods of forcing / bleaching according to any preceding claim **characterized in that** said container is provided with closing means for closing said opening.

10. Method for the production of kits for the cultivation of small quantities of plants which can be cultivated by methods of forcing / bleaching in which said plants are grown in the field until proper maturation of the plants and their root systems, they are then collected and the related root systems are prepared in roots ready to be subjected to said process of forcing / bleaching **characterized in that** said method comprises a step of housing a number between 5 and 50 of these roots, preferably between 8 and 20, and a bowl of glass or plastic material for food in a container made of material permeable to air and water vapor but substantially impermeable to light, said container being provided with an opening at one side of sufficient width to permit the passage of said bowl.

11. Method for the production of kits for the cultivation of small quantities of plants which can be cultivated by methods of forcing / bleaching according to the previous claim **characterized in that** it comprises, before said step of housing the bowl and roots in said container, a packaging step of said roots in a bag perforated or permeable to air and water vapor.

12. Method for the production of kits for the cultivation of small quantities of plants which can be cultivated by methods of forcing / bleaching according to the previous claim **characterized in that** it comprises a step of closing the opening of said container.

13. Method for the production of kits for the cultivation of small quantities of plants which can be cultivated by methods of forcing / bleaching according to claim 10 or 11 **characterized in that**, before the housing in said containers, said roots are kept at a temperature between 0 ° C and 10 ° C, preferably between 0.5 and 5 ° C, for a period of time between 1 day and 24 months, preferably between 4 and 7 months.
